# EUROPÄISCHE PATENTANMELDUNG

(11) **EP 2 443 930 A1**
(43) Veröffentlichungstag der Anmeldung: **25.04.2012**
(21) Anmeldenummer: 10188708.1
(22) Anmeldetag: 25.10.2010
(51) Int. Cl.: A21D 13/00, A23L 1/00, A23L 1/176, A23L 1/18, A21D 8/06

(54) **Vorrichtung und Verfahren zur Herstellung extrudierter Croûtons**

(71) Anmelder: Bühler AG, 9240 Uzwil (CH)
(72) Erfinder: Schäfer, Martin, 9217, Neukirch an der Thur (CH)
(74) Vertreter: Hepp Wenger Ryffel AG

(57) **Zusammenfassung**

Das erfindungsgemässe Verfahren betrifft die Herstellung eines Lebensmittels, wobei dieses insbesondere ein im Wesentlichen quaderförmiges Lebensmittel ist. Dieses Verfahren beinhaltet den Schritt der Extrusion einer Masse zur Formung eines Extrudats. Hierbei kann es sich insbesondere um ein Flachbrot handeln. Die weiteren Schritte umfassen das Abkühlen des Extrudats und daraufhin das Schneiden des Extrudats in Lebensmittel, insbesondere in im Wesentlichen quaderförmige Lebensmittel.

## Beschreibung

Die vorliegende Erfindung betrifft das Gebiet der Herstellung eines, insbesondere im Wesentlichen quaderförmigen, Lebensmittels mit den Merkmalen der Oberbegriffe der unabhängigen Ansprüche.

Aus der US 5,700,512 ist ein Verfahren zur Herstellung eines getrockneten Lebensmittels bekannt. Das offenbarte Lebensmittel hat eine Dicke von 1.5 bis 5 mm und eine derartige Dichte, so dass dieses an der Oberfläche einer Flüssigkeit schwimmt. Gemäss der Offenbarung wird das Lebensmittel in einem Kochextruder produziert und wird direkt beim Verlassen des Extruders in Stücke geschnitten.

Dieses vorbekannte Verfahren zur Herstellung eines Lebensmittels weist aber den Nachteil auf, dass die Masse, aus der das Lebensmittel hergestellt wird, beim Austritt aus dem Extruder expandiert, da die Masse im Extruder unter Druck und Hitze mit Wasser gekocht wird. Beim Verlassen des Extruders verdampft zudem zumindest ein Teil des Wassers, was zu einer Hautbildung auf der Oberfläche des Extrudats führt. Unter einer Haut an der Oberfläche des Extrudats wird hier eine im Wesentlichen geschlossene Oberflächenstruktur verstanden im Gegensatz zu einer eher offenen, brotartigen Struktur, die auch als schwammartige Struktur bezeichnet werden kann. Eine derartige brotartige Oberflächenstruktur wird aber heutzutage häufig in der Lebensmittelindustrie bei der Herstellung von Lebensmitteln wie z.B. Brotwürfeln verlangt.

Ein weiterer Nachteil dieses vorbekannten Verfahrens ist weiterhin, dass durch die Expansion des Lebensmittels die geschnittenen Stücke nicht im Wesentlichen quaderförmig sind, was aber ebenso heutzutage in der Lebensmittelindustrie bei der Herstellung von Lebensmitteln wie z.B. Brotwürfeln verlangt wird.

Es ist daher eine Aufgabe der vorliegenden Erfindung, die Nachteile des Bekannten zu vermeiden, insbesondere also ein Verfahren und eine Vorrichtung bereitzustellen, mit denen ein Lebensmittel kostengünstig und einfach herstellbar ist, wobei dieses Lebensmittel insbesondere im Wesentlichen quaderförmig sein soll sowie eine brotartige Oberflächenstruktur aufweisen soll.

Unter einer brotartigen Struktur wird im Sinne der vorliegenden Anmeldung eine derartige Struktur verstanden, die bei einem konventionellen Backprozess eines Brotes im Inneren des Brotes nach Abschluss des Backprozesses im fertigen Brot zu finden ist. Es wird also im Sinne der vorliegenden Anmeldung nicht die Oberfläche eines konventionell gebackenen Brotes, die häufig auch als Kruste bezeichnet wird, unter einer brotartigen Struktur verstanden.

Diese Aufgaben werden durch ein Verfahren sowie eine Vorrichtung gemäss dem kennzeichnenden Teil der unabhängigen Ansprüche gelöst.

Das erfindungsgemässe Verfahren betrifft die Herstellung eines Lebensmittels, wobei dieses insbesondere ein im Wesentlichen quaderförmiges Lebensmittel ist. Dieses Verfahren beinhaltet den Schritt der Extrusion einer Masse zur Formung eines Extrudats. Hierbei kann es sich insbesondere um ein Flachbrot handeln. Die weiteren Schritte umfassen das Abkühlen des Extrudats und daraufhin das Schneiden des Extrudats in Lebensmittel, insbesondere in im Wesentlichen quaderförmige Lebensmittel.

Das erfindungsgemässe Verfahren weist den Vorteil auf, dass die mit dem erfindungsgemässen Verfahren hergestellten Lebensmittel die gewünschte brotartige Oberflächenstruktur aufweisen sowie insbesondere im Wesentlichen quaderförmig sind. Dies wird dadurch erreicht, dass das Schneiden des Extrudats in insbesondere im Wesentlichen quaderförmige Lebensmittel nach dem Abkühlen des Extrudats durchgeführt wird. Das Extrudat wird insbesondere geschnitten, wenn sich die Stärke im Extrudat unter der Glasübergangstemperatur befindet, d.h. im glasartigen Zustand. Durch das Schneiden wird also die gewünschte brotartige Oberflächenstruktur zumindest teilweise freigelegt, die sich im Lebensmittel bei der Herstellung gebildet hat. Weiterhin wird durch das Schneiden des Extrudats erst nach dem Abkühlen erreicht, dass die Expansion des Extrudats beim Austritt aus dem Extruder zum Zeitpunkt des Schneidens bereits abgeschlossen ist. Nach dem Schneiden des Extrudats insbesondere in im Wesentlichen quaderförmige Lebensmittel bleibt diese Form im Wesentlichen erhalten.

Das erfindungsgemässe Verfahren ist z.B. so durchführbar, dass das Schneiden des Extrudats in im Wesentlichen quaderförmige Lebensmittel mit einer dem Extruder zugeordneten Schneidevorrichtung durchgeführt wird. Insbesondere wird das Lebensmittel geschnitten, nachdem die Expansion und die Bildung der im Wesentlichen geschlossenen Oberflächenstruktur nach dem Austritt der Masse aus dem Extruder im Wesentlichen bereits abgeschlossen sind.

Bevorzugt werden die Lebensmittel in einem weiteren Schritt nach dem Schneiden getrocknet. Dies dient insbesondere der Einstellung einer definierten Endfeuchte.

Die mögliche Einstellung der Endfeuchte durch die Trocknung hat den Vorteil, dass der Feuchtigkeitsgehalt des Lebensmittels für die jeweilige Verwendung entsprechend eingestellt werden kann. Dies ist zum Beispiel vorteilhaft, wenn beispielsweise das quaderförmige Lebensmittel als Brotwürfel für Suppen oder Salate verwendet werden soll, da unterschiedliche Endfeuchten des Lebensmittels nach Verwendungszweck, d.h. z.B. für Suppen oder Salate, vorteilhaft sind. Der Feuchtigkeitsgehalt des Lebensmittels liegt bevorzugt im Bereich von 1% bis 20% Massenanteil, und besonders bevorzugt im Bereich von 4% bis 12% Massenanteil.

Weiter bevorzugt ist der Verfahrensschritt der Extrusion eine Kochextrusion. Insbesondere wird die Extrusion als kontinuierliche Kochextrusion durchgeführt.

Dies hat den Vorteil, dass das Kochen des Lebensmittels und die Extrusion der Masse mit nur einer Vorrichtung, das heisst mit einem Kochextruder, durchgeführt werden kann. Somit wird eine kostengünstige Herstellung des Extrudats, aus dem die im Wesentlichen quaderförmigen Lebensmittel hergestellt werden, erzielt.

Besonders bevorzugt wird das Extrudat vor dem Schneiden auf eine Temperatur von nicht mehr als 50°C abgekühlt. Insbesondere wird das Extrudat vor dem Schneiden auf eine Temperatur von nicht mehr als 40°C, ganz besonders von nicht mehr als 30°C abgekühlt.

Die Abkühlung des Extrudats vor dem Schneiden hat den Vorteil, dass die Expansion des Extrudats im Wesentlichen bei diesen Temperaturen bereits abgeschlossen ist. Weiterhin ist auch die Bildung der geschlossenen Oberflächenstruktur, d. h. der Haut, bei diesen Temperaturen bereits im Wesentlichen abgeschlossen. Dies führt, wie oben bereits erläutert, dazu, dass das Lebensmittel nach dem Schneiden des Extrudats, insbesondere in im Wesentlichen quaderförmige Lebensmittel, die brotartige Oberflächenstruktur aufweist sowie die gewünschte Form im Wesentlichen beibehält, die durch den Verfahrensschritt des Schneidens erzeugt wird.

Ganz besonders bevorzugt wird das Extrudat passiv gekühlt. Insbesondere wird das Extrudat mittels Umgebungsluft gekühlt.

Die passive Kühlung des Extrudats, insbesondere mittels Umgebungsluft, hat den Vorteil, dass zur Kühlung keine zusätzliche Energie aufgewendet werden muss, was zu einer erhöhten Kosteneffizienz des Verfahrens beiträgt.

Insbesondere bevorzugt wird das Extrudat aktiv gekühlt. Bevorzugt erfolgt die Kühlung mittels Transport des Extrudats auf einem Förderband und besonders bevorzugt unter aktiver Zuführung von Luft.

Dies hat den Vorteil, dass die Zeitdauer der Abkühlung nach dem Extrudieren und vor dem Schneiden verkürzt wird.

In einer weiteren besonders bevorzugten Ausführungsform wird das Extrudat in im Wesentlichen quaderförmige Lebensmittel geschnitten, sodass dieses Lebensmittel zwei Schnittkanten aufweist. Bevorzugt weist das Lebensmittel drei Schnittkanten, besonders bevorzugt vier Schnittkanten, ganz besonders bevorzugt zumindest fünf Schnittkanten auf.

Die Wahlmöglichkeit der Anzahl der Schnittkanten hat den Vorteil, dass das Lebensmittel die brotartige Struktur nicht an allen Kanten aufweisen muss. Damit kann das Lebensmittel für den jeweiligen Verwendungszweck, z. B. für Salate oder Suppen, angepasst werden. Eine geringere Zahl von Schnittkanten führt z. B. dazu, dass die Flüssigkeitsaufnahme des Lebensmittels bei Kontakt mit einer Flüssigkeit verringert wird, was z. B. bei der Verwendung des Lebensmittels als Brotwürfel in Suppen gewünscht sein kann, damit das Lebensmittel für einen Mindestzeitraum an der Oberfläche schwimmt.

Weiter bevorzugt werden die im Wesentlichen quaderförmigen Lebensmittel in Brotwürfel und/oder Brotscheiben geschnitten.

Die Formulierung "und/oder" hat hier die Bedeutung, dass die Lebensmittel nur als Brotwürfel geschnitten werden, nur als Brotscheiben geschnitten werden oder auch in jeder beliebigen Kombination aus Brotwürfeln und Brotscheiben geschnitten sein können. Um eine Kombination von Brotwürfeln und Brotscheiben herzustellen, muss dazu eine Schneidevorrichtung so ausgelegt werden, dass gleichzeitig Brotwürfel und Brotscheiben geschnitten werden oder die Schneidevorrichtung wird nacheinander für das Schneiden von Brotwürfeln und Brotscheiben eingestellt. Es können z.B. also zuerst Brotwürfel und dann Brotscheiben geschnitten werden oder auch zuerst Brotscheiben und dann Brotwürfel.

Dies hat den Vorteil, dass die Form der Lebensmittel dem jeweiligen Verwendungszweck flexibel angepasst werden kann.

Insbesondere bevorzugt wird die Masse durch eine Düse zur Formung des Extrudats extrudiert. Insbesondere wird das Extrudat durch eine Schlitzdüse extrudiert.

Die Verwendung insbesondere einer Schlitzdüse hat den Vorteil, dass diese einfach herstellbar und somit kostengünstig ist.

In einer weiteren besonders bevorzugten Ausführungsform ist die Schlitzdüse zumindest in der Breite und/oder zumindest in der Höhe einstellbar.

Die Breite der Schlitzdüse ist in einem Bereich von b = 1 mm bis b = 20 mm einstellbar. Bevorzugt ist die Schlitzdüse in einem Bereich von b = 4 mm bis b = 16 mm einstellbar.

Die Höhe der Schlitzdüse ist in einem Bereich von h = 10 mm bis h = 40 mm einstellbar. Bevorzugt ist die Schlitzdüse in einem Bereich von h = 15 mm bis h = 30 mm einstellbar.

Die Schlitzdüse ist somit entweder nur in der Breite, nur in der Höhe oder in der Breite und der Höhe einstellbar.

Dies hat den Vorteil, dass die Form des Extrudats den jeweiligen Anforderungen an den Verfahrensschritt des Schneidens flexibel angepasst werden kann.

Bisher im Stand der Technik verwendete Sterndüsen zum extrudieren einer Masse, welche dann zur Herstellung von Brotwürfeln verwendet wird wie oben zum Stand der Technik bereits beschrieben, sind gegenüber den Schlitzdüsen nicht einstellbar. Dies führt somit zu einer geringen Flexibilität und höheren Kosten im Stand der Technik bei der Herstellung von im Wesentlichen quaderförmigen Lebensmitteln.

Ein weiterer Aspekt der Erfindung ist gerichtet auf eine Vorrichtung zur Herstellung eines Lebensmittels, insbesondere geeignet zur Durchführung des oben beschriebenen Verfahrens. Die erfindungsgemässe Vorrichtung enthält einen Extruder, eine Kühlvorrichtung und eine Schneidevorrichtung.

Diese Vorrichtung ist geeignet für die Durchführung des oben beschriebenen Verfahrens und weist damit alle oben beschriebenen Vorteile des Verfahrens auf.

Bevorzugt weist die Vorrichtung einen Kochextruder als Extruder auf.

Der Extruder ist bevorzugt als Einwellenextruder und besonders bevorzugt als Zweiwellenextruder ausgebildet.

Besonders bevorzugt weist der Extruder eine Düse auf. Insbesondere weist der Extruder eine Schlitzdüse auf.

Weiter ganz besonders bevorzugt weist die Schlitzdüse zumindest eine einstellbare Breite und/oder eine zumindest einstellbare Höhe auf.

Ein weiterer Aspekt der Erfindung ist gerichtet auf ein Lebensmittel, welches insbesondere im Wesentlichen quaderförmig ist. Dieses Lebensmittel wird mit einem erfindungsgemässen Verfahren wie oben beschrieben und/oder mit einer erfindungsgemässen Vorrichtung wie oben beschrieben hergestellt.

Beispielsweise kann dieses Lebensmittel zumindest eine oder eine Kombination der folgenden Zutaten beinhalten: Weizenmehl, insbesondere Backweizenmehl; Backpulvermischung; Salz; Zucker; Emulgator.

Alternativ zu Weizenmehl können auch Mischungen aus Weizenmehl mit anderen stärkehaltigen Getreidemehlen wie z.B. Maismehl, Reismehl und / oder Roggenmehl verwendet werden. Zudem können auch Mischungen aus Weizenmehl mit reiner Stärke oder auch modifizierter Stärke verwendet werden.

Der Einsatz verschiedener Mischungen hat den Vorteil, dass die Textur der brotartigen Struktur veränderbar ist.

Als Emulgator eignen sich beispielsweise Lecithin (E322) und /oder Mono- sowie Diglyceride von Fettsäuren (E471).

In einer bevorzugten Ausführungsform weist das quaderförmige Lebensmittel zwei Schnittkanten auf. Bevorzugt weist das Lebensmittel drei Schnittkanten, besonders bevorzugt vier Schnittkanten, ganz besonders bevorzugt zumindest fünf Schnittkanten auf.

Die Erfindung wird nachfolgend anhand von Ausführungsbeispiel zum besseren Verständnis näher erläutert.
- Figur 1:: Flussdiagramm eines erfindungsgemässen Verfahrens;
- Figur 2:: Flussdiagramm eines alternativen erfindungsgemässen Verfahrens
- Figur 3a:: Schematische Darstellung eines Extrudats vor den Verfahrensschritten "Abkühlen" und "Schneiden";
- Figur 3b:: Schematische Darstellung eines geschnittenen Lebensmittels in Würfelform mit zwei Schnittkanten, das aus dem Extrudat gemäss Figur 3a hergestellt wurde;
- Figur 4a:: Schematische Darstellung eines extrudierten Flachbrots vor den Verfahrensschritten "Abkühlen" und "Schneiden";
- Figur 4b:: Schematische Darstellung von zwei Brotscheiben mit jeweils drei Schnittkanten, die aus dem Flachbrot gemäss Figur 4a hergestellt wurden;
- Figur 5a:: Schematischer Aufbau eines erfindungsgemässen Extruders mit einer Schlitzdüse;
- Figur 5b:: Schematischer Aufbau einer Schlitzdüse, die im Extruder gemäss Figur 5a verwendet wird;
- Figur 6:: Schematischer Aufbau einer erfindungsgemässen Vorrichtung mit Extruder, Kühlvorrichtung und Schneidvorrichtung;
- Figur 7:: Perspektivische Darstellung einer Brotscheibe mit brotartiger Oberflächenstruktur;
- Figur 8a:: Perspektivische Darstellung einer Schlitzdüse mit Austrittsschlitzen;
- Figur 8b:: Alternative perspektivische Darstellung der Schlitzdüse gemäss Figur 8a von der Produkteintrittsseite;
- Figur 8c:: Schnitt einer Schlitzdüse gemäss Figur 8a;
- Figur 9a:: Schematische Darstellung einer Düsenplatte mit einer Schlitzdüse;
- Figur 9b:: Schematische Darstellung einer Düsenplatte mit zwei Schlitzdüse.

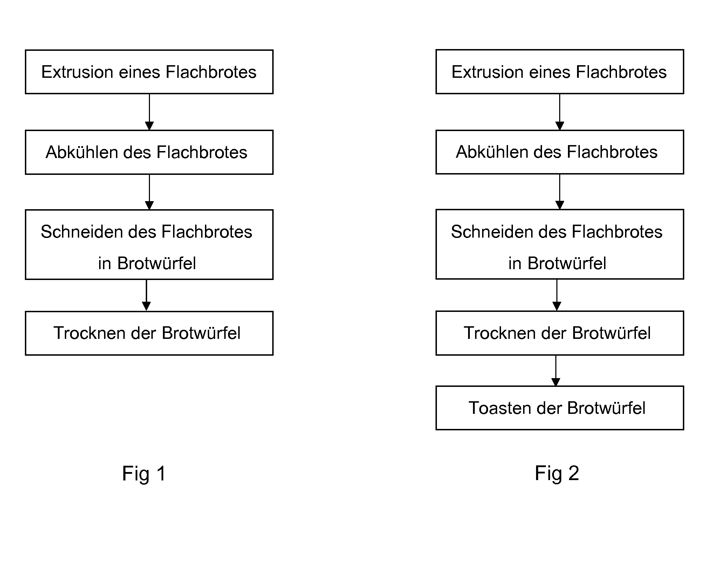

Figur 1 zeigt ein Flussdiagramm eines erfindungsgemässen Verfahrens. Hierbei wird in einem ersten Schritt ein Flachbrot aus einem Kochextruder extrudiert durch eine in der Breite einstellbare Schlitzdüse. Der Extrusionsprozess erfolgt bei Temperaturen zwischen 110 und 120°C und einem Druck zwischen 35-60 bar. Daraufhin wird das extrudierte Flachbrot passiv mittels Umgebungsluft auf eine Temperatur von nicht mehr als 30°C abgekühlt. In einem weiteren Schritt wird das Flachbrot in eine Schneidemaschine eingebracht, in der das Flachbrot in Brotwürfel der Kantenlänge von ca. 5 mm geschnitten wird. Die hier geschnittenen Brotwürfel weisen sechs Schnittkanten auf. Als Schneidevorrichtung können beispielsweise Geräte der Firma Urschel (Beispielsweise: Urschel Würfelschneidemaschine J9-A) verwendet werden. In einem nächsten Schritt werden die geschnittenen Brotwürfel in einer Trocknungsanlage getrocknet auf eine Endfeuchte von weniger als 8% Massenanteil Wasser im Brotwürfel.

Figur 2 zeigt ein alternatives Flussdiagramm eines erfindungsgemässen Verfahrens. Hierbei entsprechen die Verfahrensschritte Extrusion, Abkühlen, Schneiden und Trocknen den bereits in Figur 1 beschriebenen Verfahrensschritten. Im Unterschied zu Figur 1 wird hier jedoch eine in der Breite und Höhe einstellbare Schlitzdüse bei der Extrusion des Flachbrotes verwendet. Im Anschluss an das Trocknen der Brotwürfel werden diese in einem weiteren Schritt getoastet. Dieser Prozessschritt führt zu einer weiteren Reduktion der Endfeuchte der Brotwürfel auf von weniger als 5% Massenanteil Wasser im Brotwürfel.

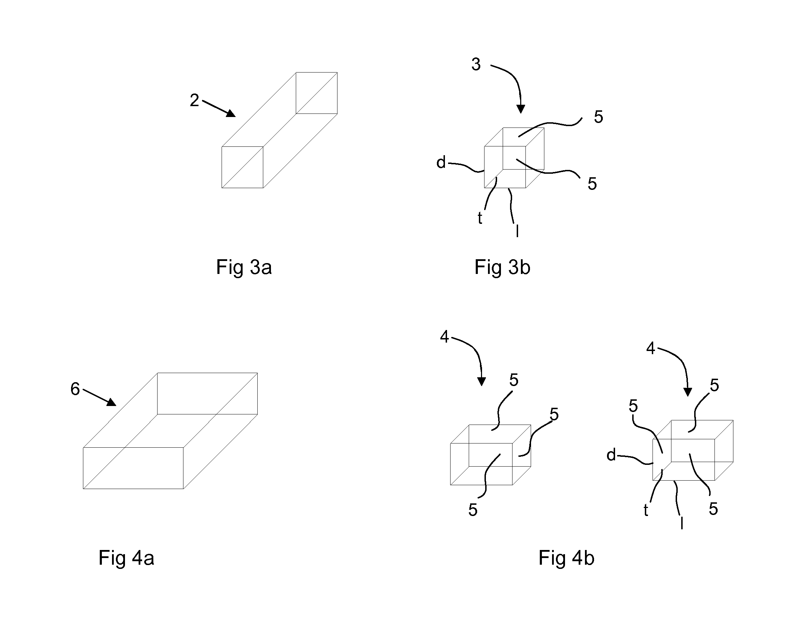

Figur 3a zeigt schematisch ein Extrudat 2 nach der Extrusion aus einem Extruder mit einer Schlitzdüse. Die hier schematisch als Gerade dargestellten Kanten des Extrudats sind üblicherweise nach aussen gebogen, da das Extrudat 2 beim Austritt durch die Schlitzdüse aus dem Extruder expandiert.

Figur 3b zeigt schematisch einen Brotwürfel 3, der durch Schneiden des in Figur 3a dargestellten Extrudats nach dem Abkühlen des Extrudats hergestellt wurde. Der Brotwürfel 3 weist eine Dicke d, eine Länge 1 sowie eine Tiefe t von jeweils ca. 4 mm auf. Zudem weist der Brotwürfel 3 zwei zueinander parallele Schnittkanten 5 auf. Zumindest diese beiden Schnittkanten 5 haben eine hier nicht gezeigte brotartige Struktur.

Figur 4a zeigt ein aus einem Extruder extrudiertes Flachbrot 6, welches durch eine Schlitzdüse extrudiert wurde. Diese Schlitzdüse weist eine Breite auf, die grösser als die Höhe der Schlitzdüse ist. Auch hier sind die Kanten nur schematisch als gerade Kanten dargestellt wie bereits in Figur 3a erläutert.

In Figur 4b sind schematisch zwei Brotscheiben 4 dargestellt. Diese wurden durch Schneiden des in Figur 4a dargestellten Flachbrots hergestellt, nachdem das Flachbrot abgekühlt wurde. Die Brotscheiben 4 weisen eine Dicke d von 3 mm auf, eine Tiefe t von 5 mm und eine Länge 1 von 9 mm. Weiterhin weisen die Brotscheiben 4 jeweils drei Schnittkanten 5 auf.

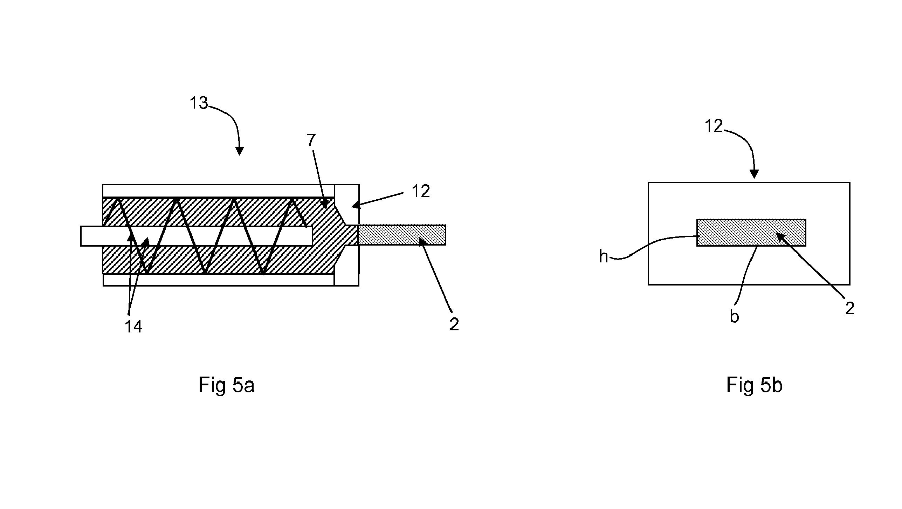

In Figur 5a ist schematisch ein Kochextruder 13 in Seitenansicht dargestellt. Dieser Kochextruder 13 weist eine Welle 14 zur Kochextrusion einer Masse 7 auf, die sich im Kochextruder 13 befindet. Weiterhin weist der Kochextruder 13 eine Schlitzdüse 12 auf. Die Masse 7 wird mittels der Welle 14 durch die Schlitzdüse 12 gefördert zur Formung des Extrudats 2.

Figur 5b zeigt die Vorderansicht der Schlitzdüse 12, die in dem in Figur 5a beschriebenen Kochextruder zur Formung der Masse 2 verwendet wird. Die Schlitzdüse 12 weist eine Höhe h von 2 mm auf und eine Breite b von 37 mm.

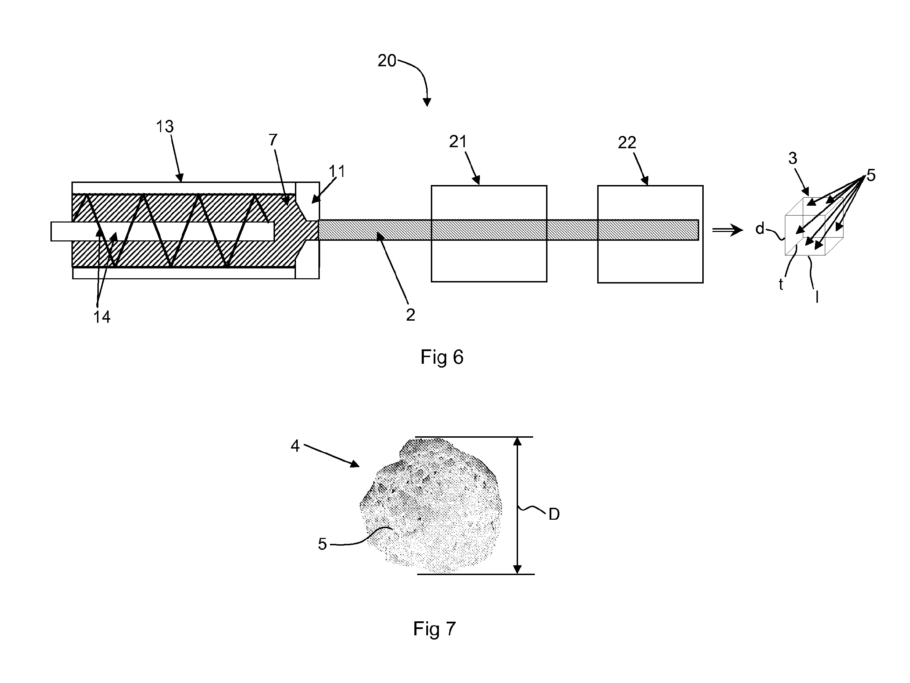

Figur 6 zeigt eine erfindungsgemässe Vorrichtung 20 zur Herstellung eines Brotwürfels 3.

In dem Kochextruder 13, der eine Welle 14 sowie eine Düse 11 umfasst, befindet sich eine Masse 7, die in dem Kochextruder 13 gekocht, gemischt und transportiert wird. Der Transport und die Mischung der Masse 7 erfolgt durch die rotierende Welle 14. Die Masse 7 wird durch die Düse 11 extrudiert zur Formung eines

Extrudats 2. Dieses Extrudat 2 wird mittels einer hier nicht gezeigten Transportvorrichtung in die Kühlvorrichtung 21 transportiert, die das Extrudat 2 mittels Umgebungsluft passiv kühlt auf unter 40°C. Nach dem Abkühlen wird das abgekühlte Extrudat 2 in die Schneidevorrichtung 22 transportiert, in der das Extrudat 2 in Brotwürfel 3 geschnitten werden. Diese Brotwürfel 3 weisen sechs Schnittkanten 5 auf, die jeweils eine brotartige Struktur aufweisen. Die Brotwürfel 3 haben eine Dicke d von 6 mm, eine Tiefe t von 5 mm sowie eine Länge 1 von 7 mm.

In Figur 7 ist eine Bild einer Brotscheibe 4 mit brotartiger Oberflächenstruktur dargestellt. Diese Brotscheibe 4, welche zwei Schnittkanten 5 aufweist, von denen lediglich eine sichtbar ist, wurde in einer erfindungsgemässen Vorrichtung mit dem erfindungsgemässen Verfahren hergestellt.

Die Brotscheibe 4 hat einen Durchmesser D von 25 mm und eine Dicke von 6 mm.

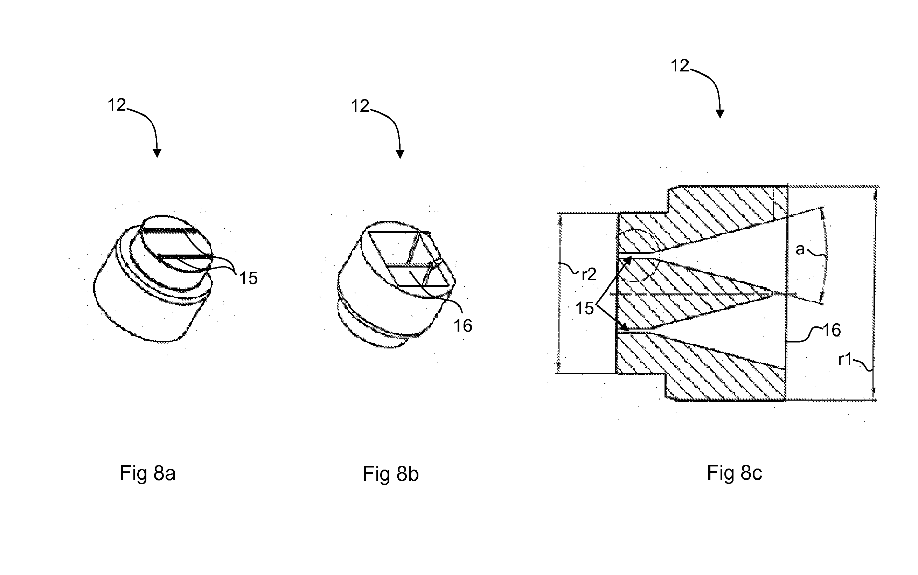

In Figur 8a ist eine Schlitzdüse 12 in perspektivischer Darstellung gezeigt mit zwei Austrittsschlitzen 15, durch die ein nicht gezeigtes Extrudat austreten kann.

In Figur 8b ist die Schlitzdüse 12 gemäss Figur 8a aus einem anderen Blickwinkel dargestellt mit einem Produkteintritt 16. Eine nicht gezeigte Masse tritt aus dem nicht gezeigten Extruder in den Produkteintritt 16 der Schlitzdüse 12 ein und wird durch nicht gezeigte Austrittsschlitze extrudiert.

In Figur 8c ist ein Schnitt durch eine entsprechende Schlitzdüse 12 der Figur 8a dargestellt. Der Durchmesser r1 der Produkteintrittsseite beträgt hier 62 mm und der Durchmesser r2 der Produktaustrittsseite beträgt 47 mm. Der Bereich konischer Verengung zwischen Produkteintrittsseite 16 und den Austrittsschlitzen 15 hat einen Winkel a = 30°.

Die hier dargestellte Schlitzdüse 12 weist zwei Austrittsschlitze 15 auf und hat deshalb ebenfalls zwei Bereiche konischer Verengung.

Wird nur einer der beiden Austrittsschlitze 15 im Betrieb benötigt, so kann einer der Austrittsschlitze 15 verschlossen werden.

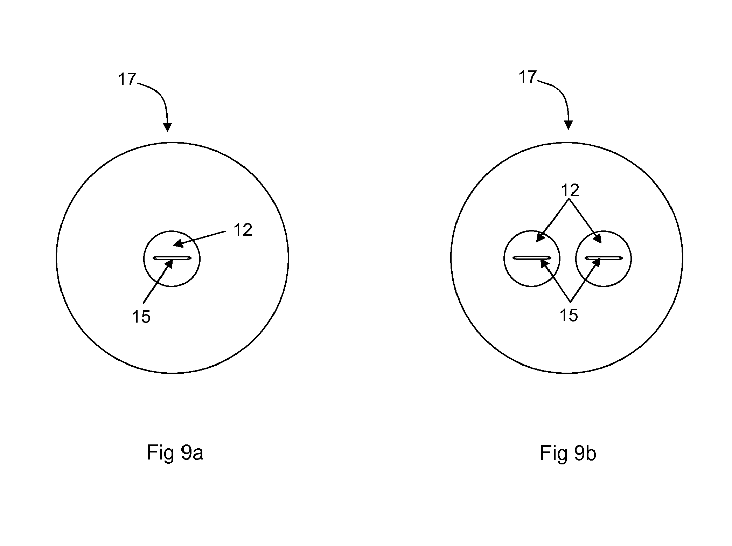

In Figur 9a ist eine Düsenplatte 17 mit einer Schlitzdüse 12 gezeigt mit einem Austrittsschlitz 15. Die Düsenplatte 17 ist zur Befestigung am austrittsseitigen Ende des Extruders geeignet.

In Figur 9b ist eine alternative Düsenplatte 17 mit zwei Schlitzdüsen 12 gezeigt mit jeweils einem Austrittsschlitz 15.

### Beispiel 1:

Die folgende Rezeptur eignet sich zur Verwendung im erfindungsgemässen Verfahren zur Crouton-Herstellung:

| Rohmaterial | % |
|---|---|
| Weizenmehl | 97.3 |
| Natriumbicarbonat | 0.5 |
| Dinatriumdiphosphat (E450) | 0.7 |
| Zucker (Saccharose) | 0.3 |
| Mono-, Diglyceride von Fettsäure (E474) | 0.5 |
| Salz | 0.7 |
| Feststoff gesamt | 100.0 |

Dieser Feststoffmischung werden bezogen auf den gesamten Feststoff 30 Gew.% Wasser hinzugegeben.

### Beispiel 2:

Die folgende, alternative Rezeptur eignet sich zur Verwendung im erfindungsgemässen Verfahren zur Crouton-Herstellung:

| Rohmaterial | % |
|---|---|
| Weizenmehl | 92.8 |
| Maisstärke | 2.0 |
| Acetyliertes Disärkephosphat (E1414) | 2.5 |
| Zucker (Saccharose) | 1.1 |
| Mono-, Diglyceride von Fettsäure (E474) | 0.5 |
| Salz | 1.1 |
| Feststoff gesamt | 100.0 |

Dieser Feststoffmischung werden bezogen auf den gesamten Feststoff 25 Gew.% Wasser hinzugegeben.

## Patentansprüche

1. Verfahren zur Herstellung eines, insbesondere im Wesentlichen quaderförmigen, Lebensmittels (1), **gekennzeichnet durch** die folgenden Schritte:
a) Extrusion einer Masse (7) zur Formung eines Extrudats (2), insbesondere eines Flachbrots (6);
b) Abkühlen des Extrudats (2), insbesondere unter die Glasübergangstemperatur der Stärke im Extrudat;
c) Schneiden des Extrudats (2), insbesondere in im Wesentlichen quaderförmige Lebensmittel (1).

2. Verfahren nach Anspruch 1, **dadurch gekennzeichnet, dass** die Lebensmittel (1) nach dem Schneiden getrocknet werden, insbesondere zur Einstellung einer Endfeuchte.

3. Verfahren nach Anspruch 1 oder 2, **dadurch gekennzeichnet, dass** die Extrusion eine Kochextrusion, insbesondere eine kontinuierliche Kochextrusion ist.

4. Verfahren nach einem der Ansprüche 1 bis 3, **dadurch gekennzeichnet, dass** das Extrudat (2) vor dem Schneiden auf eine Temperatur von nicht mehr als 50°C, besonders von nicht mehr als 40°C, ganz besonders von nicht mehr als 30°C abgekühlt wird.

5. Verfahren nach Anspruch 4, **dadurch gekennzeichnet, dass** das Extrudat (2) passiv gekühlt wird, insbesondere mittels Umgebungsluft.

6. Verfahren nach Anspruch 4, **dadurch gekennzeichnet, dass** das Extrudat (2) aktiv gekühlt wird, insbesondere mittels Transport auf einem Förderband, besonders bevorzugt unter aktiver Zuführung von Luft.

7. Verfahren nach einem der Ansprüche 1 bis 6, **dadurch gekennzeichnet, dass** das Extrudat (2) in im Wesentlichen quaderförmige Lebensmittel (1) geschnitten wird, so dass das quaderförmige Lebensmittel (1) zwei Schnittkanten (5), bevorzugt drei Schnittkanten (5), besonders bevorzugt vier Schnittkanten (5), ganz besonders bevorzugt zumindest fünf Schnittkanten (5) aufweist.

8. Verfahren nach einem der Ansprüche 1 bis 7, **dadurch gekennzeichnet, dass** das im Wesentlichen quaderförmige Lebensmittel (1) in Brotwürfel (3) und / oder Brotscheiben (4) geschnitten wird.

9. Verfahren nach einem der Ansprüche 1 bis 8, **dadurch gekennzeichnet, dass** die Masse (7) durch eine Düse (11), insbesondere eine Schlitzdüse (12) extrudiert wird zur Formung des Extrudats (2).

10. Verfahren nach Anspruch 9, **dadurch gekennzeichnet, dass** die Schlitzdüse (12) zumindest in der Breite b und / oder zumindest in der Höhe h eingestellt wird.

11. Vorrichtung (20) zur Herstellung eines Lebensmittels (1), insbesondere mittels eines Verfahrens gemäss einem der Ansprüche 1 bis 10, **dadurch gekennzeichnet, dass** die Vorrichtung (20) einen Extruder (10), eine Kühlvorrichtung (21) und eine Schneidevorrichtung (22) umfasst.

12. Vorrichtung (20) nach Anspruch 11, **dadurch gekennzeichnet, dass** der Extruder (10) ein Kochextruder (13) ist.

13. Vorrichtung (20) nach Anspruch 11 oder 12, **dadurch gekennzeichnet, dass** der Extruder (10) eine Düse (11), insbesondere eine Schlitzdüse (12) aufweist.

14. Vorrichtung (20) nach Anspruch 13, **dadurch gekennzeichnet, dass** die Schlitzdüse (12) zumindest eine einstellbare Breite b und / oder eine zumindest einstellbare Höhe h aufweist.

15. Lebensmittel (1), **dadurch gekennzeichnet, dass** das Lebensmittel (1) insbesondere ein im Wesentlichen quaderförmiges Lebensmittel (1) ist und mittels eines Verfahrens gemäss einem der Ansprüche 1 bis 10 und / oder mittels einer Vorrichtung gemäss einem der Ansprüche 11 bis 14 hergestellt wird.

16. Lebensmittel (1) nach Anspruch 15, **dadurch gekennzeichnet, dass** das Lebensmittel (1) zwei Schnittkanten (5), bevorzugt drei Schnittkanten (5), besonders bevorzugt vier Schnittkanten (5), ganz besonders bevorzugt zumindest fünf Schnittkanten (5) aufweist.
